Europäisches Patentamt

European Patent Office

Office européen des brevets

(19)

(11) Veröffentlichungsnummer : **0 391 927 B1**

## (12) EUROPÄISCHE PATENTSCHRIFT

(45) Veröffentlichungstag der Patentschrift :
**17.07.91 Patentblatt 91/29**

(51) Int. Cl.$^5$ : **B31B 1/25, B31B 1/82, B31B 17/25, B31B 17/82**

(21) Anmeldenummer : **88909293.8**

(22) Anmeldetag : **27.10.88**

(86) Internationale Anmeldenummer :
**PCT/DE88/00662**

(87) Internationale Veröffentlichungsnummer :
**WO 89/04252 18.05.89 Gazette 89/11**

(54) VERFAHREN ZUR HERSTELLUNG VON FOLIENZUSCHNITTEN FÜR FALTSCHACHTELN MIT WINKELFENSTERN BZW. SOLCHER FALTSCHACHTELN UND ENTSPRECHENDE VORRICHTUNG.

(30) Priorität : **07.11.87 DE 3737968**

(43) Veröffentlichungstag der Anmeldung :
**17.10.90 Patentblatt 90/42**

(45) Bekanntmachung des Hinweises auf die Patenterteilung :
**17.07.91 Patentblatt 91/29**

(84) Benannte Vertragsstaaten :
**AT BE CH DE FR GB IT LI LU NL SE**

(56) Entgegenhaltungen :
**DE-A- 3 148 443
DE-A- 3 210 967
GB-B- 507 786
US-A- 3 292 513
US-A- 4 642 086**

(73) Patentinhaber : **KOHMANN GMBH & CO. KG MASCHINENBAU
Benninghofer Weg 7
W-4020 Mettmann (DE)**

(72) Erfinder : **KOHMANN, Karl-Heinz
Benninghofer Weg 7
W-4020 Mettmann (DE)**

(74) Vertreter : **Palgen, Peter, Dipl.-Phys. Dr.
Mulvanystrasse 2
W-4000 Düsseldorf (DE)**

# Beschreibung

Die Erfindung bezieht sich auf Verfahren nach dem Oberbegriff des Anspruchs 1 sowie eine entsprechende Vorrichtung nach dem Oberbegriff des Anspruchs 3.

Ein dem Oberbegriff des Anspruchs 1 entsprechendes Verfahren und eine solche Vorrichtung sind aus der US-PS 32 92 513 bekannt. Hierbei wird ein ein Winkelfenster für eine Faltschachtel ergebender Kunststoffzuschnitt auf einer Presse mit linienförmigen feststehenden Prägeelementen oder mittels einer auf dem Folienzuschnitt abrollenden Rillrolle mit Prägerillen versehen, die später die Biegekanten des Winkelfensters ergeben. Von einer Beheizung des Folienzuschnitts oder der Prägewerkzeuge ist nicht die Rede.

In der US-PS 32 92 513 ist eine Reihe von beispielsweisen Materialien für die durchsichtigen Winkelfenster genannt, nämlich biaxial orientiertes Polystyrol, Celluloseacetat, Celluloseacetat-Butyrat-Copolymer, Polyvinyl-chlorid-Acetat-Copolymer, Polyäthylen und Polypropylen in Stärken von 0,125 bis 0,625 mm.

Diese Materialien sind sämtlich teurer als durchsichtiges Hart-PVC (Polyvinylchlorid), welches seit einiger Zeit glasklar lieferbar ist und in weichmacherfreiem Zustand die nötige Steifigkeit aufweist, ohne direkt spröde zu sein. Aus Kostengründen wird daher für Faltschachtelfenster die Verwendung dieses Materials angestrebt.

Allerdings hat dieses Material die Eigenschaft, daß es bei starker plastischer Verformung im Verformungsbereich trüb bzw. weißlich wird, so daß eine Knicklinie, d.h. eine Biegelinie mit sehr kleinem Radius, längs der die biegeäußeren Schichten sehr stark gestreckt werden, als weißer Strich sichtbar ist. Diese Erscheinung wird als Weißbrüchigkeit bezeichnet. Sie führt dazu, daß die Biegekanten von Winkelfenstern als weiße Linien erscheinen, die störend und unerwünscht sind.

Wird Hart-PVC vor dem Biegen nach dem Verfahren der US-PS 32 92 513 vorgeprägt, d.h. entlang der Biegekanten mit Vertiefungen versehen, so tritt die sogenannte Weißbrüchigkeit entlang der Biegekanten ebenfalls auf, weil die Rillwerkzeuge beim Eindringen in das Folienmaterial einen erheblichen Druck auf die Flanken der Rille ausüben und das Folienmaterial im Bereich des Rillengrundes in Querrichtung strecken, wodurch wiederum eine weiße Linie entsteht.

Auch bei der DE-PS 31 48 443 geht es um eine Faltschachtel mit einem Winkelfenster aus Hart-PVC. Hierbei erfolgt jedoch die Herstellung der Rillen bei auf die Sichtfensteröffnung des Kartonzuschnitts aufgelegtem Folienzuschnitt. Das Prägen der die Biegekanten ergebenden Rillen erfolgt also intermittierend, wodurch die Arbeitsgeschwindigkeit beschränkt bleibt. Die Ausbildung der Rillen im Bereich des Randes der Sichtfensteröffnung ist kritisch. Bei der Ausbildung der Rillen kann Wärme zu Hilfe genommen werden, ohne daß gesagt ist, wie dies geschehen soll. Wenn die Rillwerkzeuge beheizt sind, ist die Zeit für eine durchgreifende Erwärmung des Folienzuschnittes zu gering und besteht die Gefahr einer unsauberen Ausbildung der die Biegekante ergebenden Rille, ohne daß die Gefahr der Weißbrüchigkeit beim Aufrichten des Faltschachtelzuschnitts gebannt wäre.

Bei der DE-PS 32 10 967 geht es um die Herstellung von Faltschachtelzuschnitten aus Hart-PVC-Folie. Es besteht hierbei also die ganze Faltschachtel aus durchsichtiger PVC-Folie. Im Bereich der Biegekanten ist die Hart-PVC-Folien linienförmig geprägt. Zur Herstellung dieser Prägung wird die PVC-Folie durch eine auf die Folienoberfläche gerichtete Wärmestrahlung vorgewärmt und anschließend unmittelbar vor dem Prägen der die Biegekanten ergebenden Rillen an einer auf die Folienoberfläche gerichteten Heizgasströmung entlangbewegt und über ihre ganze Fläche auf eine unterhalb der Schmelztemperatur des PVC-Material liegende Temperatur erhitzt. Das Ziel ist hierbei in erster Linie die Vermeidung der Rückfederung des Hart-PVC-Materials beim Aufrichten der Schachtel. Der Beheizungsaufwand ist erheblich und birgt stets das Risiko in sich, daß die Hart-PVC-Folie wellig wird und kein sauberes Winkelfenster mehr ergibt.

Die Beheizung der gesamten Fläche der PVC-Folie ist bei dem Verfahren nach der DE-PS 25 41 324 vermieden, bei welchem die Oberfläche der Folie im Bereich der Biegekante mittels Hochfrequenz auf eine unter der Schmelztemperatur des Kunststoffes liegende Temperatur erwärmt wird.

Eine Hochfrequenzerwärmung ist jedoch in der Praxis wegen des erforderlichen Aufwandes für die Isolierung und die beschirmung gegen Streufelder mißlich. Derartige Streufelder beeinflussen die heute überall vorhandenen elektronischen Steuerungen in der Umgebung der Maschine.

Der Erfindung liegt in einem Aspekt die Aufgabe zugrunde, ein Verfahren zur Herstellung von Folienzuschnitten gemäß dem Oberbegriff des Anspruchs 1 so auszugestalten, daß mit möglichst geringem apparativen Aufwand die die Biegekanten ergebenden Rillen derart geprägt werden können, daß beim Biegen keine Weißbrüchigkeit auftritt.

Diese Aufgabe wird durch die in Anspruch 1 wiedergegebene Erfindung gelöst.

Ein wesentlicher Punkt ist die Beheizung des bewegten Folienmaterials in einer länglichen, in der Breite im wesentlichen auf die Biegezone beschränkten Heizzone. Dies bedeutet, daß das Folienmaterial bei seinem Weg durch die Heizzone wegen deren Längenerstreckung Zeit hat, sich durchgreifend zu erwärmen. Der erwärmte Bereich des Folienmaterials tritt unmittelbar nach dem Verlassen der Heizzone zwischen eine kalte Rillrolle und eine kalte Gegenwalze ein, die an dem im Bereich der Rillrolle plastifizierten Folienmaterial eine in dessen Bewegungsrichtung verlaufende Rille erzeugen, in der die Materialstärke um ein gewisses Maß reduziert ist. Es hat sich überraschenderweise gezeigt, daß, wenn ein solchermaßen vorbereiteter Folienzuschnitt in den zugehörigen Faltschachtelzuschnitt eingeklebt ist und mit diesem aufgerichtet wird, völlig transparente Biegekanten ohne Andeutung von Weißbrüchigkeit erzielbar sind.

Wenn ein Winkelfenster mehrere Biegekanten erhalten soll, werden entsprechend viele Heizzonen und Rillrollen nebeneinander angeordnet.

In dem vorgenannten Aspekt der Erfindung ging es in erster Linie um die einfache Erzeugung weißbruchfreier Biegekanten. Insoweit könnte die Erfindung auch an einzelnen durch die Vorrichtung geförderten Folienzuschnitten praktiziert werden.

Eine wichtige Weiterentwicklung der Erfindung geht von der Aufgabe aus, ein Verfahren zur Herstellung von Faltschachteln mit Winkelfenstern anzugeben, bei welchem mit möglichst geringem Aufwand Winkelfenster mit weißbruchfreien Biegekanten bei einer möglichst großen Arbeitsgeschwindigkeit hergestellt werden können.

Diese weitere Aufgabe wird durch die Ausgestaltung nach Anspruch 2 gelöst.

Durch das Arbeiten "von der Rolle" kann die Folienbahn praktisch in einem Zuge ohne Unterbrechungen, intermittierende Arbeitsweise und hin- und hergehende Bewegungen erwärmt, gerillt, quergeteilt und auf den Faltschachtelzuschnitt aufgelegt werden, wo die Verklebung stattfindet. Es hat sich gezeigt, daß nach dem erfindungsgemäßen Verfahren die mehrfache Leistung der bekannten Arbeitsweisen erzielbar ist.

Die Erfindung verkörpert sich auch in einer Vorrichtung nach Anspruch 3, wobei die Steigerung der Arbeitsgeschwindigkeit bei der Herstellung der kompletten Faltschachteln durch die Merkmale des Anspruchs 4 ermöglicht wird.

Ein wichtiges Merkmal ist die Tatsache, daß die Gegenwalze glatt ist (Anspruch 5), d.h. daß die Rille einseitig in den Folienzuschnitt eingebracht wird. Zusammen mit dem Merkmal, daß die Rillrolle und die Gegenwalze beide kalt arbeiten und dies in einem erwärmten Bereich des Folienmaterials tun, ergibt sich hierdurch eine Ausbildung der Rille ohne Entstehung hoher Querzugkräfte, die zu der Entstehung von Weißbrüchigkeit führen könnten.

In der bevorzugten Ausführungsform besteht die Heizeinrichtung aus an dem Folienzuschnitt anliegenden Heizschienen, die auf einfache Weise durch ein in Längsrichtung eingelegtes elektrisches Heizelement über ihre Länge auf die gewünschte Temperatur aufgeheizt werden können.

Die Länge der Heizschienen bestimmt zusammen mit der Vorschubgeschwindigkeit des Folienmaterials die Zeit, in der der mit der Rille zu versehende Bereich des Folienmaterials der Wärme ausgesetzt ist. Um ein Verziehen der Folien zu vermeiden, sollte sich der Erwärmungsbereich im wesentlichen auf den Bereich der zu bildenden Rille beschränken.

Bewährte bemessungen für die Heizschienen sind in Anspruch 7 wiedergegeben.

Damit die an dem Folienmaterial anliegenden Heizschienen an dem Folienmaterial nicht hängenbleiben und dessen Oberfläche beschädigen, wenn das Folienmaterial fortschreitend erweicht, ist es zweckmäßig, wenn die Heizschienen gemäß Anspruch 8 mit einer wärmebeständigen Gleitfolie, beispielsweise aus PTFE oder dergleichen, belegt sind.

Ausgangspunkt der Erfindung war zwar das zur Weißbrüchigkeit neigende durchsichtige Hart-PVC, doch ist sie nicht hierauf beschränkt.

In der Zeichnung ist ein Ausführungsbeispiel der Erfindung schematisch wiedergegeben.

Fig. 1 zeigt eine perspektivische Ansicht einer Faltschachtel mit Winkelfenster ;

Fig. 2 zeigt eine Seitenansicht des Vorrichtungsteils zur Herstellung einer eine Biegekante ergebenden Rille im Folienmaterial ;

Fig. 3 zeigt einen Querschnitt durch die Heizschiene nach der Linie III-III in Fig. 2 ;

Fig. 4 zeigt einen Teilquerschnitt nach der Linie I-I in Fig. 2 ;

Fig. 5 zeigt eine schematische Seitenansicht einer vollständigen Fenstereinklebemaschine, in der der Vorrichtungsteil nach Fig. 2 eingesetzt ist ;

Fig. 6 zeigt eine Ansicht einer Folienbahn in dem in der darüber angeordneten Fenstereinklebemaschine erzielten Arbeitsfortschritt.

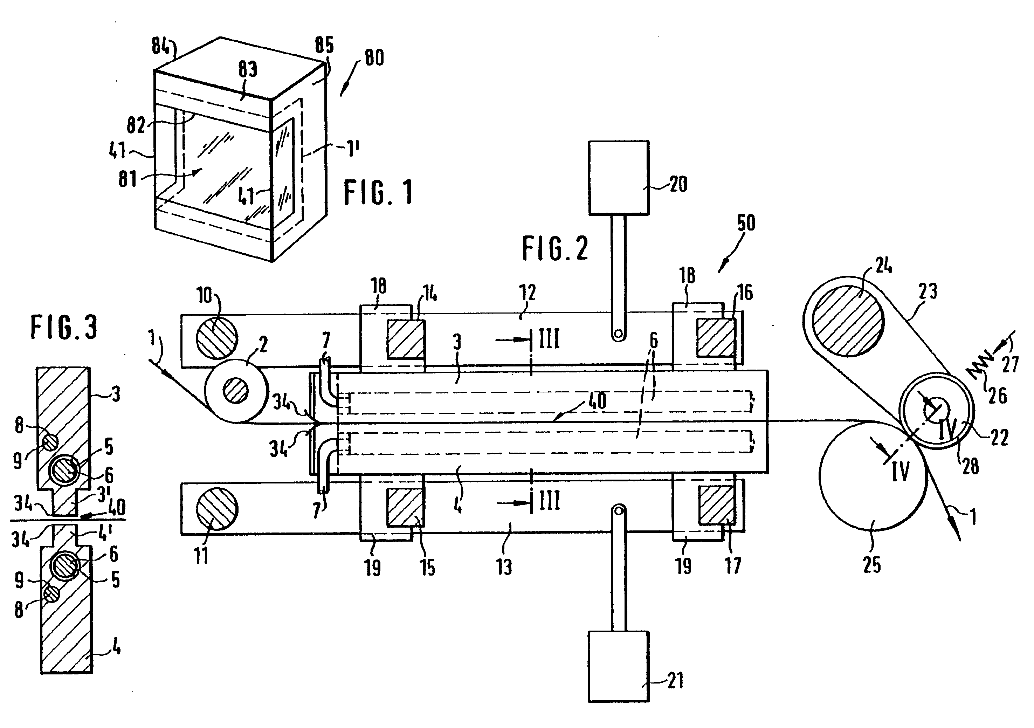

In Fig. 1 ist eine Faltschachtel 80 aus Karton mit einem durchsichtigen Winkelfenster 81 dargestellt, welches aus einem Folienzuschnitt 1' besteht, um dessen Herstellung es geht. Die Faltschachtel 80 ist quaderförmig ausgebildet und besitzt in der Vorderfläche 83 und den beiden angrenzenden, einander gegenüberliegenden Seitenflächen 84, 85 einen Ausschnitt 82, der von dem innen in die Faltschachtel 80 eingeklebten Folienzuschnitt 1' überdeckt wird. Die Faltschachtel 80 kann auch aus einem anderen Material als Karton, z.B. Wellpappe, bestehen. Auch können der Ausschnitt 82 anders gestaltet und der Grundriß statt rechteckig z.B. dreieckig oder sechseckig sein, so daß an den Biegekanten 41 andere Biegewinkel auftreten.

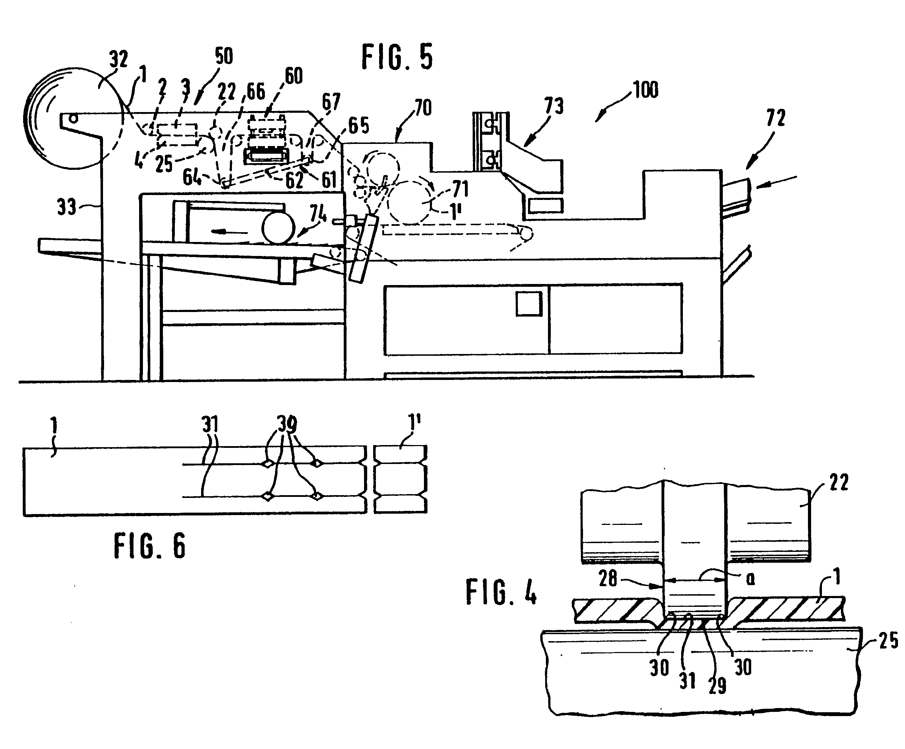

Da sich der Folienzuschnitt 1' sowohl auf der Vorderseite 83 als auch auf den beiden Seitenflächen 84, 85 erstreckt, weist er Biegekanten 41 auf, in denen er um 90° abgewinkelt ist. Da die Biegekanten 41 unmittelbar im Blickfeld liegen, müssen sie möglichst einwandfrei ausgebildet und insbesondere frei von Weißbrüchigkeit sein. Zur Vorbereitung der Biegekanten 41 werden in dem flachliegenden Folienzuschnitt 1' Rillen 31 /Fig. 6) angebracht, für die in der Fenstereinklebemaschine 100 (Fig. 5) ein besonderer Vorrichtungsteil 50 vorgesehen ist, um den es hier geht.

Der in Fig. 2 als Ganzes mit 50 bezeichnete Vorrichtungsteil verarbeitet eine Bahn 1 aus einem ziemlich steifen, weichmacherfreien Hart-PVC von etwa 0,3 mm Dicke, die von einer in Fig. 2 nicht wiedergegebenen, in Fig. 5 mit 32 bezeichneten Rolle abgezogen und über eine Rolle 2 zwischen Paare von Heizschienen 3, 4 eingeleitet wird, die in dem Ausführungsbeispiel eine Länge von 36 cm aufweisen. Es sind so viele Paare von Heizschienen 3, 4 vorhanden, wie in der Folienbahn 1 Rillen 31 zur Bildung von Biegekanten 41 erzeugt werden sollen (Fig. 5, 6).

Der Querschnitt eines Paars von Heizschienen 3, 4 ist aus Fig. 3 ersichtlich. Er ist im wesentlichen rechteckig mit einem von einer Schmalseite vorspringenden schmäleren Fuß 3' bzw. 4', mit welchem die Heizschienen 3, 4 einander gegenüberliegen. Die Füße 3', 4' erstrecken sich längs der Heizschienen 3, 4 und sind mit den einander zugewandten Seiten parallel zur Folienbahn 1 begrenzt. Längs jedes Fußes ist ein schmaler Streifen 34 aus PTFE aufgeklebt, über welchen die Füße 3, 4 mit sanftem Druck von beiden Seiten einander genau gegenüberliegend an der Folienbahn 1 anliegen.

Die Heizschienen 3, 4 weisen in der Nähe der Füße 3', 4' Längsbohrungen 5 auf, in denen stabförmige elektrische Heizelemente 6 angeordnet sind, die sich im wesentlichen über die ganze Länge der Heizschienen 3, 4 erstrecken und über Zuleitungen 7 versorgt werden. Ausserdem sind noch Längsbohrungen 8 vorhanden, in denen Temperaturmeßelemente 9 sitzen, mittels deren die Temperatur der Heizschienen 3, 4 genau auf einen vorbestimmten Wert eingeregelt werden kann.

Zwischen den Seitenwänden des Maschinengestells erstrecken sich oberhalb und unterhalb der im Bereich der Heizschienen 3, 4 etwa horizontal verlaufenden Folienbahn 1 Wellen 10, 11, die vor dem Einlauf der Folienbahn 1 zwischen die Heizschienen 3, 4 gelegen sind und von denen horizontal in Bewegungsrichtung der Folienbahn 1 zu beiden Seiten derselben Tragarme 12, 13 ausgehen, die durch Querstäbe 14, 15 bzw. 16, 17 quadratischen Querschnitts miteinander verbunden sind, die in Bewegungsrichtung der Folienbahn 1 bestand voneinander aufweisen. Am Rücken der Heizschienen 3, 4 sind U-förmige Befestigungsstücke 18, 19 angebracht, die in Bewegungsrichtung der Folienbahn 1 offen sind und die Querstäbe 14, 15, 16, 17 gemäß Fig. 2 im Innern aufnehmen können. Die Heizschienen 3, 4 können auf diese Weise einfach angebracht und in Querrichtung der Folienbahn 1 justiert werden. Die Festlegung an den Querstäben 14, 15, 16, 17 erfolgt durch Klemmschrauben.

Die Tragschienen 12, 13 können mittels pneumatischer Zylinder 20, 21 um die Wellen 10, 11 verschwenkt werden, so daß die Folienbahn 1 eingezogen werden kann.

Dicht hinter dem in Fig. 1 rechten Ende der Heizschienen 3, 4 ist in der durch die Heizschienen 3, 4 gebildeten Ebene eine Rillrolle 22 angeordnet, die an einem nur angedeuteten Hebel 23 um eine in Querrichtung zwischen den Seitenwänden des Maschinengestells sich erstreckenden Welle 24 verschwenkbar ist. Die Verschwenkung erfolgt bis zur Anlage an einer sich quer über die Breite der Folienbahn 1 erstreckenden glatten Gegenwalze 25. Durch die Verschwenkung des Hebels 23 kann die Rillrolle 22 mit einer einstellbaren elastischen Kraft gegen die Oberseite der auf der Rückseite durch die glatte Gegenwalze 25 abgestützten Folienbahn 1 angedrückt werden, wie es durch die Feder 26 und den Pfeil 27 angedeutet ist.

Die Ausbildung der Rillrolle 22 im einzelnen ist aus Fig. 4 ersichtlich. Es handelt sich um eine im wesentlichen zylindrische Rolle mit einer Umfangsrippe 28, die einen zylindrischen Umfangsteil 29 mit zur Vermeidung des Schneidens abgerundeten Ecken 30 aufweist. Die Umfangsrippe 28 bildet das eigentliche Rillwerkzeug. Die Breite a der Umfangsrippe 28 kann im Bereich von 0,5 bis 3,0 mm variieren, je nach dem zu verarbeitenden Folienmaterial.

Im Betrieb wird die Folienbahn 1 von der Rolle abgewickelt und ohne vorherige Erwärmung zwischen die Heizschienen 3, 4 eingeleitet. Sie durchläuft dann Heizzonen 40, die eine der Länge der Heizschienen 3, 4 entsprechende Länge und eine der Breite der Füße 3', 4' entsprechende Breite aufweisen. Zum Durchlaufen einer Heizzone 40 benötigt die Folienbahn 1 eine gewisse Zeit, während deren eine bestimmte Stelle im Bereich der Heizzone 40 der Temperaturübertragung ausgesetzt ist. Am Ende der Heizzone 40 ist der Bereich, in dem eine Rille angebracht werden soll, durchgreifend erwärmt. Nach dem Verlassen der Heizschienen 3, 4 läuft dieser Bereich sogleich zwischen die Rillrolle 22 und deren Gegenwalze 25 ein, die beide ungeheizt sind. Unter der Wirkung der elastischen Anlagekraft 26, 27 ergibt sich in dem Material der Folienbahn 1 eine Verformung etwa in der aus Fig. 4 ersichtlichen Weise. Die das Rillwerkzeug bildende Umfangsrippe 28 dringt in die Folienbahn ein und verringert im Bereich des zylindrischen Umfangsteils 29 die Stärke des Folienmaterials größenordnungsmäßig auf etwa die Hälfte. Dabei hebt das Folienmaterial neben der Umfangsrippe 28 in der aus Fig. 3 ersichtlichen Weise etwas von der glatten Gegenwalze 25 ab, so daß sich eine Rille 31 von einem etwa trogförmigen Querschnitt ergibt, wobei das Innere der Rille beim Aufrichten der Faltschachtel die biegeäußere Seite bildet.

Durch das Zusammenwirken der langen Heizzone 40, deren Breite nicht wesentlich über die Breite der zu erzeugenden Rille 31 hinausgeht, und der kalten Rillwerkzeuge 22, 25 ergibt sich ein gerilltes Folienmaterial, welches außerhalb der Rillen völlig eben bleibt und eine von Weißbruch freie Ausbildung der Biegekante 41 (Fig. 1) erlaubt.

In Fig. 5 ist eine als Ganzes mit 100 bezeichnete Fenstereinklebemaschine wiedergegeben, in die der Vorrichtungsteil 50 der Fig. 2 bis 4 integriert ist. Die Rolle 32 ist in dem als Ganzes mit 33 bezeichneten Maschinengestell gelagert, von welchem in der Zeichnung nur die vordere Seitenwand erkennbar ist. Die Folienbahn 1 durchläuft den Vorrichtungsteil 50 und gelangt, nachdem die einander parallelen Längsrillen 31 (Fig. 6) erzeugt worden sind, in eine Stanzstation 60, in der rautenförmige Ausschnitte 39 in der Folienbahn erzeugt werden, die am Übergang der Biegekanten in den Kartonzuschnitt benötigt werden, um überhöhte Spannungen in dem dort doppelten Material zu vermeiden. Die Stanzstation 60 arbeitet natürlich intermittierend. Die Antriebe der Folienbahn 1 vor und hinter der Stanzstation 60 laufen gleichmäßig weiter. Zum Ausgleich dieser unterschiedlichen Bewegungen ist ein Kompensator 61 vorgesehen, der zu beiden Seiten der Folienbahn 1 um einen mittleren Schwenkpunkt 62 verschwenkbare Schwingen 63 umfaßt, an deren freien Enden Rollen 64, 65 gelagert sind, die in der Folienbahn 1 Vorratsschlaufen 66, 67 bilden, die während des Anhaltens der Folienbahn 1 in der Stanzstation 60 die weiterlaufenden Bahnabschnitte aufnehmen.

Nach dem Stanzen der rautenförmigen Lochungen 39 gelangt die Folienbahn 1 in einen Querschneider 70, in welchem sie in Höhe der Lochungen 39 abgeteilt wird, so daß Folienzuschnitte 1' der aus Fig. 6 ersichtlichen Gestalt entstehen. Diese Folienzuschnitte 1' werden von einer Saugwalze 71 rapportgenau auf die beleimten Kartonzuschnitte übertragen, die bei 72 zugeführt und in dem Leimwerk 73 beleimt werden. Die fertigen Faltschachtelzuschnitte werden bei 74 abtransportiert.

## Patentansprüche

1. Verfahren zur Herstellung von Folienzuschnitten für Faltschachteln mit Winkelfenstern, bei welchem in mit einem Ausschnitt versehene Faltschachtelzuschnitte mit vorgeprägten Rillen für die die Winkel bildenden Biegekanten versehene Folienzuschnitte aus einem harten durchsichtigen thermoplastischen Kunststoff eingeklebt werden, dadurch gekennzeichnet, daß das Material für die Folienzuschnitte durch pro Biegekante eine sich in Bewegungsrichtung des Folienmaterials erstreckende, sich in der Breite im wesentlichen auf die Biegezone beschränkende, von beiden Seiten gegen das Folienmaterial wirkende feststehende Heizzone und unmittelbar hinter der Heizzone zwischen einer unter Druck gegen das Folienmaterial anliegenden ungeheizten Rillrolle und einer ungeheizten Gegenwalze hindurchgeleitet sowie anschließend in die Folienzuschnitte quergeteilt wird.

2. Verfahren nach Anspruch 1, dadurch gekennzeichnet, daß das Material für die Folienzuschnitte kontinuierlich von der Rolle abgewickelt wird und die Folienzuschnitte zur Herstellung von Faltschachteln sogleich mit den herangeführten Faltschachtelzuschnitten verklebt werden.

3. Vorrichtung zur Herstellung von Folienzuschnitten (1') mit einer Transporteinrichtung für das Folienmaterial (1) und mit einer Prägeeinrichtung (22, 25) für die die Biegekanten ergebenden Rillen, dadurch gekennzeichnet, daß eine der Prägeeinrichtung (22, 25) unmittelbar vorgeschaltete Heizeinrichtung (3, 4) mit einer länglichen, sich in Bewegungsrichtung des Folienmaterial erstreckenden, in der Breite im wesentlichen auf die Biegezone beschränkten Heizzone (40) vorgesehen ist und die Prägeeinrichtung aus einer ungeheizten Rillrolle (22) und einer ungeheizten Gegenwalze (25), zwischen denen das Folienmaterial hindurchleitbar ist, besteht.

4. Vorrichtung nach Anspruch 3, dadurch gekennzeichnet, daß das Folienmaterial als Folienbahn (1) von der Rolle (32) abziehbar und durch die Heizeinrichtung (3, 4) und die Prägeeinrichtung (22, 25) hindurchleitbar sowie nach dem Prägen in Folienzuschnitte (1') querteilbar ist, die unmittelbar nach dem Querteilen mit Kartonzuschnitten zur Herstellung von Faltschachteln verklebbar sind.

5. Vorrichtung nach Anspruch 3 oder 4, dadurch gekennzeichnet, daß die Gegenwalze (25) glatt ist.

6. Vorrichtung nach einem der Ansprüche 3 bis 5, dadurch gekennzeichnet, daß die Heizeinrichtung aus zwei einander zu beiden Seiten des Folienmaterial gegenüberliegenden, in Bewegungsrichtung des Folienmaterials sich erstreckenden, an dem Folienmaterial anliegenden Heizschienen (3, 4) besteht,

7. Vorrichtung nach Anspruch 6, dadurch gekennzeichnet, daß die Heizschienen (3, 4) 300 bis 500 mm lang und im Anlagebereich 3 bis 8 mm breit sind.

8. Vorrichtung nach Anspruch 6 oder 7, dadurch gekennzeichnet, daß die Heizschienen (3, 49) mit einer wärmebeständigen Gleitfolie (34) belegt sind.

## Claims

1. A method of producing sheet material blanks for folding boxes with angular windows, in which method sheet material blanks, consisting of a hard transparent thermoplastic and provided with pre-embossed grooves for the bending edges forming the angles, are glued into folding box blanks provided with a cut-out, characterised in that the material for the sheet material blanks is passed, for each bending edge, through a stationary heating zone extending in the direction of movement of the sheet material and of a width limited substantially to the bending zone and acting against the sheet material from both sides, and, immediately after the heating zone, between a unheated grooved roller bearing with pressure against the sheet material, and an unheated companion roller, and is then transversely divided into the sheet material blanks.

2. A method according to claim 1, characterised in that the material for the sheet blanks is continuously unwound from the roll and the sheet material blanks are immediately glued to the supplied folding box blanks for the purpose of producing folding boxes.

3. Apparatus for the production of sheet material blanks (1'), comprising a transport means for the sheet material (1) and comprising an embossing means (22, 25) for the grooves which produce the bending edges, characterised in that a heating device (3, 4) immediately preceding the embossing means (22, 25) is provided with an elongate heating zone (40) extending in the direction of movement of the sheet material and of a width limited substantially to the bending zone, and the embossing means consists of an unheated grooved roller (22) and an unheated companion roller (25) between which the sheet material can be passed.

4. Apparatus according to claim 3, characterised in that the sheet material is adapted to be withdrawn in the form of a web (1) from the roll (32) and is adapted to be passed through the heating means (3, 4) and the embossing means (22, 25) and, after embossing, is transversely divisible into sheet material blanks (1') which immediately after the transverse division are adapted to be glued to cardboard blanks for the production of folding boxes.

5. Apparatus according to claim 3 or 4, characterised in that the companion roller (25) is smooth.

6. Apparatus according to any one of claims 3 to 5, characterised in that the heating means consists of two heating rails (3, 4) bearing against the sheet material and situated opposite one another on either side of the sheet material and extending in the direction of movement of the latter.

7. Apparatus according to claim 6, characterized in that the heating rails (3, 4) are 300 to 500 mm long and 3 to 8 mm wide in the abutment zone.

8. Apparatus according to claim 6 or 7, characterized in that the heating rails (3, 49) are covered by a heat-resistant slip-improving film (34).

## Revendications

1. Procédé pour la fabrication de découpes de feuilles destinées à des cartonnages pliants avec des fenêtres d'angles, d'après lequel il est collé sur des découpes de cartonnage pliant pourvues d'une échancrure des découpes de feuilles en une matière thermoplastique dure transparente pourvues de rainures préempreintes pour les arêtes de pliage constituant les angles, caractérisé en ce que la matière des découpes de feuilles est conduite à travers une zone de chauffage fixe s'étendant, par arête de pliage, en direction du déplacement de la matière en feuille, qui agit des deux côtés sur la matière en feuille en se limitant essentiellement à la zone de pliage et, immédiatement après la zone de chauffage, entre un rouleau de rainurage non chauffé s'appuyant avec pression contre la matière en feuille et un contre-rouleau non chauffé, puis est ensuite partagée transversalement en découpes de feuilles.

2. Procédé selon la revendication 1, caractérisé en ce que la matière des découpes de feuilles est déroulée en continu du rouleau et en ce que les découpes de feuilles destinées à la fabrication de cartonnages pliants sont aussitôt collées avec les découpes approchées de cartonnages pliants.

3. Dispositif pour la fabrication de découpes de feuilles (1) comprenant un dispositif de transport de la matière en feuilles (1) et un dispositif de matriçage (22, 25) des rainures donnant lieu aux bords de pliage, caractérisé en ce qu'il est prévu une zone de chauffage (3, 4), disposée immédiatement avant le dispositif de matriçage (22, 25) avec une zone de chauffage (40) allongée s'étendant en direction du déplacement de la matière en feuille et limitée essentiellement en largeur à la zone de pliage et en ce que le dispositif de matriçage est constitué par un rouleau de rainurage (22) non chauffé et par un contre-rouleau (25) non chauffé, entre lesquels peut être guidée la matière en feuille.

4. Dispositif selon la revendication 3, caractérisé en ce que la matière en feuille peut être prélevée sur le rouleau (32) sous forme d'une bande (1) et guidée à travers le dispositif de chauffage (3, 4) et le dispositif de matriçage (22, 25) est divisible transversalement en découpes (1'), qui peuvent être collées, aussitôt après le partage transversal, avec des découpes de carton pour la fabrication de cartonnages pliants.

5. Dispositif selon la revendication 3 ou 4, caractérisé en ce que le contre-rouleau est lisse.

6. Dispositif selon l'une des revendications 3 à 5, caractérisé en ce que le dispositif de chauffage est constitué par deux bandes de chauffage (3, 4) situées en regard des deux côtés de la matière en feuille, s'étendant en direction du déplacement de la matière en feuille et adjacentes à la matière en feuille.

7. Dispositif selon la revendication 6, caractérisé en ce que les bandes de chauffage (3, 4) ont une longueur de 300 à 500 mm et une largeur de 300 à 500 mm dans la zone d'application.

8. Dispositif selon la revendication 6 ou 7, caractérisé en ce que les bandes de chauffage (3, 4) sont garnies d'une feuille glissante (34) stable à la chaleur.

FIG. 1
FIG. 2
FIG. 3

EP 0 391 927 B1

7

FIG. 5

FIG. 6

FIG. 4

EP 0 391 927 B1